# EUROPEAN PATENT APPLICATION

(11) **EP 0 837 105 A1**
(43) Date of publication of application: **22.04.1998**
(21) Application number: 97308130.0
(22) Date of filing: 14.10.1997
(51) Int. Cl.: C08L 95/00, C08F 210/02

(54) **Asphalt modifier and asphalt composition containing said modifier**

(30) Priority: 15.10.1996 JP 272051/96
(71) Applicant: SUMITOMO CHEMICAL COMPANY, LIMITED, Chuo-ku Osaka 541 (JP)
(72) Inventor: Yamaguchi, Noboru, Ichihara-shi, Chiba (JP); Fujita, Harunori, Ichihara-shi, Chiba (JP)
(74) Representative: Cresswell, Thomas Anthony

(57) **Abstract**

The present invention provides an asphalt modifier containing an ethylene copolymer having a repeating unit derived from ethylene and a repeating unit derived from an epoxy group-containing compound or an ethylene copolymer having a repeating unit derived from ethylene, a repeating unit derived from an epoxy group-containing compound and a repeating unit derived from an ethylenically unsaturated ester, both copolymers having a melt flow rate of 50 to 1000 g/10 minutes, which is superior in solubility in asphalt, and an asphalt composition containing the modifier.

## Description

The present invention relates to an asphalt modifier, and an asphalt composition containing the modifier.

Resin-added asphalt compositions and rubber-added asphalt compositions are widely used for pavement. For example, JP-B-2-21421 discloses a composition containing asphalt and an ethylene-alkyl acrylate-maleic anhydride terpolymer having a melt flow rate of 5 to 50 g/10 minutes.

However, bonding between the said composition and an aggregate is not necessarily sufficient, and it takes a long time for the said terpolymer to be dissolved in asphalt because of its low affinity to asphalt.

An object of the present invention is to provide an asphalt modifier which is superior in solubility in asphalt. Another object of the present invention is to provide an asphalt composition containing the modifier and asphalt, which is superior in bonding to an aggregate.

As a result of intensive studies about asphalt modifiers, the present inventors have found that the object of the present invention can be accomplished by an asphalt modifier containing a specific ethylene copolymer, and an asphalt composition containing the modifier. Thus, the present invention was accomplished.

The present invention provides an asphalt modifier 1 comprising an ethylene copolymer 1 having a repeating unit derived from ethylene and a repeating unit derived from an epoxy group-containing compound, the copolymer having a melt flow rate of more than 50 g/10 minutes and not more than 1000 g/10 minutes.

The present invention also provides an asphalt modifier 2 comprising an ethylene copolymer 2 having a repeating unit derived from ethylene, a repeating unit derived from an epoxy group-containing compound and a repeating unit derived from an ethylenically unsaturated ester, the copolymer having a melt flow rate of more than 50 g/10 minutes and not more than 1000 g/10 minutes.

The present invention further provides asphalt composition comprising 100 parts by weight of asphalt and 0.1 to 10 parts by weight of the above asphalt modifier 1 or/and asphalt modifier 2.

The ethylene copolymer 1 comprised in the asphalt modifier of the present invention is an ethylene copolymer having a repeating unit derived from ethylene(hereinafter referred to as an "ethylene unit") and a repeating unit derived from an epoxy group-containing compound (hereinafter referred to as an "epoxy group-containing unit"), and the ethylene copolymer has a melt flow rate of 50 to 1000 g/10 minutes.

The ethylene copolymer 2 is an ethylene copolymer having an ethylene unit, an epoxy group-containing unit and a repeating unit derived from an ethylenically unsaturated ester (hereinafter referred to as an "ethylenically unsaturated ester unit"), and the ethylene copolymer has a melt flow rate of 50 to 1000 g/10 minutes.

The content of the ethylene unit in the ethylene copolymer 1 is from 70 to 99.9% by weight, preferably from 80 to 97% by weight. The content of the epoxy group-containing compound unit in the ethylene copolymer 1 is from 30 to 0.1% bv weight, preferably from 20 to 3% by weight.

In the ethylene copolymer 2, the content of the ethylene unit is from 20 to 99. 8% by weight, preferably from 40 to 94% by weight, the content of the epoxy group-containing unit is from 30 to 0.1% by weight, preferably from 20 to 3% by weight, and the content of the ethylenically unsaturated ester unit is from 0.1 to 50% by weight, preferably from 3 to 40% by weight.

Examples of the epoxy group-containing compound of the ethylene copolymer 1 or 2 used in the present invention include unsaturated glycidyl ethers and unsaturated glycidyl esters. Specific examples thereof include glycidyl acrylate, glycidyl methacrylate, allyl glycidyl ether and 2-methylallyl glycidyl ether. Among them, glycidyl methacrylate is particularly preferred.

Examples of the ethylenically unsaturated ester in the ethylene copolymer 2 include vinyl acetate and α,β-unsaturated carboxylic acid alkyl ester. The α,β-unsaturated carboxylic acid alkyl ester is an alkyl ester of an unsaturated carboxylic acid having 3 to 8 carbon atoms, such as acrylic acid and methacrylic acid. Specific examples thereof include methyl acrylate, ethyl acrylate, n-propyl acrylate, isopropyl acrylate, n-butyl acrylate, t-butyl acrylate, isobutyl acrylate, methyl methacrylate, ethyl methacrylate, n-propyl methacrylate, isopropyl methacrylate, n-butyl methacrylate, t-butyl methacrylate and isobutyl methacrylate. Among them, vinyl acetate, methyl acrylate, ethyl acrylate, n-butyl acrylate and methyl methacryate are particularly preferred.

It is necessary that the melt flow rate (MFR) of the ethylene copolymer 1 or 2 measured at 190°C under the load of 2.16 kg is more than 50 and not more than 1000 g/10 minutes, preferably from 80 to 500 g/10 minutes, more preferably from 100 to 400 g/10 minutes. When MFR is 50 g/10 minutes or less, the solubility may be lowered. On the other hand, when MFR is larger than 1000 g/10 minutes, the bonding strength between the asphalt composition and agglomerate may be lowered.

These asphalt modifiers can be made, for example, by high pressure polymerization using peroxide initiator and their MFR can be controlled, for example, by adjusting polymerization temperature or polymerization pressure, and/or using chain transfer agent.

The asphalt composition of the present invention comprises 100 parts by weight of asphalt and 0.1 to 10 parts, preferably 0.5 to 5 parts by weight, of the asphalt modifier 1 and/or 2.

Asphalt is not specifically limited. Examples thereof include paving straight asphalt, natural asphalt such as lake asphalt, semi-blown asphalt, straight asphalt modified by partially using blown asphalt and tar-modified straight asphalt. They may be used alone or in combination thereof.

So far as the object of the present invention is attained, the asphalt composition may further contain known various modifiers. Examples of the modifier include rubber, thermoplastic elastomer and other ethylene copolymers.

Among the other ethylene copolymers, an ethylene-ethylenically unsaturated ester copolymer is particularly preferred because of its excellent compatibility with the asphalt composition of the present invention.

The method of producing the asphalt composition of the present invention is not specifically limited. For example, the asphalt modifier 1 or 2 of the present invention may be added to asphalt, followed by melting with kneading. The temperature at which the modifier and asphalt are molten is, for example, from 160 to 200°C.

The asphalt modifier 1 or 2 of the present invention is superior in solubility in asphalt.

The asphalt composition of the present invention exhibits high bonding strength with an aggregate. The following Examples further illustrate the present invention in detail but are not to be construed to limit the scope of the present invention.

Method for measuring the physical properties in the Examples and Comparative Examples are shown below.
(1) Penetration of asphalt
   Measured according to the method defined in JIS K2207.
(2) Melt flow rate (MFR)
   Measured according to the method defined in JIS K6760.
(3) Content of ethylene unit, vinyl acetate unit and diglycidyl methacrylate unit
   Determined by a calibration method from absorbehcy of characteristic absorption of infrared absorption spectrum of the press sheet which was made from the ethylene copolymer(asphalt modifier), the absorbency having been corrected by thickness of the press sheet. As the characteristic absorption, a peak of 609 cm⁻¹ was used for vinyl acetate and that of 910 cm⁻¹ was used for glycidyl methacrylate. The content of the ethylene unit was determined by subtracting the content of the above two comonomer from 100% by weight.
(4) Bonding between asphalt composition and aggregate
   Measured according to the method defined in the static peeling test of the Outline of Asphalt Paving. The peeled state was judged visually according to four-level criteria, 1 (0%), II (5-12%), III (12-28%) and IV (28% or more) of the pattern classification table of the peeled state described in the cooperative test report (No.6) on peeling of paving asphalt, published by the Petroleum Society Corporation,
(5) Solubility in asphalt
   An insoluble matter floats on the surface of asphalt when a modifier having poor solubility is added to asphalt. After mixing asphalt and a modifier at a temperature of 180°C for 30 minutes, the state of an insoluble matter floating on the surface of asphalt was visually judged in the following manner.
   ○: An insoluble matter of the modifier is not observed on the surface of asphalt, that is, the modifier is completely dissolved.
   × : An insoluble matter of the modifier is observed on the surface of asphalt.

### Example 1

As the modifier, an ethylene copolymer (B-1) having MFR of 350 g/10 minutes, wherein the content of the ethylene unit is 82% by weight and that of the glycidyl methacrylate unit is 18% by weight, was used. 100 Parts by weight of asphalt having penetration rate of 70 and 2 parts by weight of the above modifier were melt-kneaded at 180°C for 30 minutes. Using the asphalt composition thus obtained, bonding between the asphalt composition and aggregate (No.6 quarried stone) was measured. The results are shown in Table 1.

### Example 2

The same manner as that described in Example 1 was carried out, except for using an ethylene copolymer (B-2) having MFR of 380 g/10 minutes, wherein the content of the ethylene unit is 69% by weight, that of the glycidyl methacrylate unit is 5% by weight and that of the vinyl acetate unit is 26% by weight in place of B-1. The results are shown in Table 1.

### Comparative Example 1

The same manner as that described in Example 1 was carried out, except for using no modifier. The results are shown in Table 1.

### Comparative Example 2

The same manner as that described in Example 1 was carried out, except for using an ethylene copolymer (B-3) having MFR of 3 g/10 minutes, wherein the content of the ethylene unit is 88% by weight and that of the glycidyl methacrylate unit is 12% by weight in place of B-1. The results are shown in Table 1.

**[Table 1]**

| | Example | | Comparative Example | |
|---|---|---|---|---|
| | 1 | 2 | 1 | 2 |
| Asphalt modifier | B-1 | B-2 | - | B-3 |
| Amount (parts by weight) | 2 | 2 | 0 | 2 |

| [ ]Evaluation] | | | | |
|---|---|---|---|---|
| Bonding | I | I | IV | IV |
| Solubility | ○ | ○ | - | × |
| (Note) B-1: Ethylene-glycidyl methacrylate copolymer (content of ethylene unit: 82% by weight, content of glycidyl methacrylate unit: 18% by weight, MFR: 350 g/10 minutes) B-2: Ethylene-glycidyl methacrylate-vinyl acetate terpolymer (content of ethylene unit: 69% by weight, content of glycidyl methacrylate unit: 5% by weight, content of vinyl acetate unit: 26% by weight, MFR: 380 g/10 minutes) B-3: Ethylene-glycidyl methacrylate copolymer (content of ethylene unit: 88% by weight, content of glycidyl methacrylate unit: 12% by weight, MFR: 3 g/10 minutes, IGETABOND E manufactured by Sumitomo Chem. Co.) | | | | |

## Claims

1. An asphalt modifier comprising an ethylene copolymer having a repeating unit derived from ethylene and a repeating unit derived from an epoxy group-containing compound, the copolymer having a melt flow rate of more than 50 g/10 minutes and not more than 1000 g/10 minutes.

2. An asphalt modifier comprising an ethylene copolymer having a repeating unit derived from ethylene, a repeating unit derived from an epoxy group-containing compound and a repeating unit derived from an ethylenically unsaturated ester, the copolymer having a melt flow rate of more than 50 g/10 minutes and not more than 1000 g/10 minutes.

3. An asphalt modifier according to claim 1, wherein the content of the ethylene unit in the copolymer is from 70 to 99.9% by weight, and the content of the epoxy group-containing compound unit is from 30 to 0.1% by weight.

4. An asphalt modifier according to claim 1, wherein the content of the ethylene unit in the copolymer is from 80 to 97% by weight, and the content of the epoxy group-containing compound unit is from 20 to 3% by weight.

5. An asphalt modifier according to claim 2, wherein the content of the ethylene unit is from 20 to 99.8% by weight, the content of the epoxy group-containing unit is from 30 to 0.1% by weight, and the content of the ethylenically unsaturated ester unit is from 0.1 to 50% by weight.

6. An asphalt modifier according to claim 2, wherein the content of the ethylene unit is from 40 to 94% by weight, the content of the epoxy group-containing unit is from 20 to 3% by weight, and the content of the ethylenically unsaturated ester unit is from 3 to 40% by weight.

7. An asphalt modifier according to any one of the preceding claims, wherein the melt flow rate is from 80 to 500 g/10 minutes.

8. An asphalt modifier according to any one of the preceding claims, wherein the melt flow rate is from 100 to 400 g/10 minutes.

9. A method for modifying asphalt which comprises adding an asphalt modifier according to any one of the preceding claims to asphalt.

10. Use of an ethylene copolymer having a repeating unit derived from ethylene and a repeating unit derived from an epoxy group-containing compound, the copolymer having a melt flow rate of more than 50 g/10 minutes and not more than 1000 g/10 minutes, as an asphalt modifier.

11. Use of an ethylene copolymer having a repeating unit derived from ethylene, a repeating unit derived from an epoxy group-containing compound and a repeating unit derived from an ethylenically unsaturated ester, the copolymer having a melt flow rate of more than 50 g/10 minutes and not more than 1000 g/10 minutes, as an asphalt modifier.

12. An asphalt composition comprising 100 parts by weight of asphalt and 0.1 to 10 parts by weight of an asphalt modifier according to any one of claims 1 to 8.
